# EUROPÄISCHE PATENTSCHRIFT

(11) **EP 2 825 598 B1**
(45) Veröffentlichungstag und Bekanntmachung des Hinweises auf die Patenterteilung: **08.09.2021**
(21) Anmeldenummer: 13710323.0
(22) Anmeldetag: 07.03.2013
(51) Int. Cl.: C08K 3/016, C08L 75/08, C08K 3/00, C08K 3/22, C08K 9/06, C08K 5/00, C08K 5/521

(54) **FLAMMGESCHÜTZTES THERMOPLASTISCHES POLYURETHAN ENTHALTEND UMHÜLLTE METALLHYDROXIDE AUF DER BASIS VON ALUMINIUM**
FIRE-RETARDANT TPU ON THE BASIS OF ENCASED METAL HYDROXIDES
TPU IGNIFUGE À BASE D'HYDROXYDES MÉTALLIQUES ENROBÉS

(30) Priorität: 13.03.2012 EP 12159156
(43) Veröffentlichungstag der Anmeldung: 21.01.2015
(73) Patentinhaber: BASF SE, 67056 Ludwigshafen am Rhein (DE)
(72) Erfinder: HENZE, Oliver, Steffen, 49448 Lemförde (DE); MÜHREN, Oliver, 49565 Bramsche (DE); BERTELS, Alfons, 49356 Diepholz (DE); CONRAD, Sabine, 49356 Diepholz (DE); FLUG, Thomas, 49419 Wagenfeld (DE); RUDOLPH, Hans, 49152 Bad Essen (DE); BECKMANN, Christian, 49328 Melle (DE); MEIER, Dietmar, 32351 Stemwede-Oppendorf (DE)
(74) Vertreter: BASF IP Association
(86) Internationale Anmeldenummer: PCT/EP2013/054565
(87) Internationale Veröffentlichungsnummer: WO 2013/135547

(56) Entgegenhaltungen:
- EP-A1- 1 213 325
- EP-A1- 2 072 573
- EP-A2- 0 370 517
- WO-A1-2009/103765
- JP-A- 10 204 298
- Huber Martinswerk: "Aluminum Hydroxides & Magnesium Hydroxides for the Plastic Industry", , XP55501021, Retrieved from the Internet: URL:https://www.hubermaterials.com/userfil es/files/PFDocs/Huber%20Fire%20Retardant%2 0Additives%20(European%20Version).pdf [retrieved on 2018-08-21]
- DR INGO HEIM: "Innovative flame retardancy Innovative flame retardancy for plastics and rubber for plastics and rubber", SPECIALITY ADDITIVES BILTHOVEN 2006, 7 December 2006 (2006-12-07), XP055684754,

## Beschreibung

Die Erfindung bezieht sich auf flammgeschützte thermoplastische Polyurethane.

### Stand der Technik

Flammgeschützte thermoplastische Polyurethane sind seit langem bekannt. Dabei können den thermoplastischen Polyurethanen (TPU) sowohl halogenhaltige als auch halogenfreie Flammschutzmittel beigemischt werden. Die halogenfrei flammgeschützten TPU haben dabei in der Regel den Vorteil, dass sie beim Abbrennen weniger toxische und weniger korrosive Rauchgase entwickeln. Die besonderen Vorteile der halogenfreien flammgeschützten TPU sind bereits eingehend beschrieben (e.g. EP 00617079 B1; EP 1874854 B1, EP 1490430 B1).

Zum halogenfreien Flammschutz von TPU können stickstoffhaltige und/oder phosphorhaltige Flammschutzmittel verwendet werden (EP 00617079 B1; EP 1874854 B1, EP 1490430 B1). Die alleinige Verwendung von phosphorhaltigen Flammschutzmitteln kann häufig keinen ausreichenden Flammschutz gewährleisten. Die Verwendung von stickstoffhaltigen Flammschutzmitteln allein oder in Kombination mit phosphorhaltigen Flammschutzmitteln dagegen gibt häufig sehr gut flammgeschützte TPU, hat aber auch den Nachteil, dass durch die stickstoffhaltigen Verbindungen auch giftige Brandgase wie HCN oder Stickoxide freigesetzt werden können.

Zum halogenfreien Flammschutz von TPU können auch Metallhydroxide allein oder in Kombination mit phosphorhaltigen Flammschutzmitteln und/oder Schichtsilicaten eingesetzt werden (DE 10 343 121 A1; EP 1 167 429 B1; EP 01 491 580 B1; EP 1 183 306 B1; WO 2011 / 050 520 A1). Es wurde gezeigt, dass diese Mischungen zum einen sehr gute Flammschutzeigenschaften zum anderen sehr niedrige Rauchgastoxizitäten aufweisen.

Nachteil von Mischungen basierend auf TPU in Kombination mit Metallhydroxiden ist eine geringe Alterungsbeständigkeit, die diese Materialen für viele Einsatzgebiete ungeeignet erscheinen lassen. So wird z.B. in der EP 2 374 843 A1 ein Versuch unternommen durch die Zugabe von schwer löslichen Oxiden von zwei und dreiwertigen Metallen eine verbesserte Alterungsbeständigkeit zu erreichen.

Wie aus der WO 2009/103 765 hervorgeht ist ein weiteres Problem, das bei der Substitution von Flammschutzmitteln in thermoplastischem Polyurethan auftritt, die schlechteren mechanischen Eigenschaften der so hergestellten thermoplastischen Polyurethane, der man in dieser Publikationsschrift versucht mit einem zusätzlichen Vernetzungsmittel entgegenzuwirken.

Die EP 0 370 517 A2 offenbart Flammschutz in halogenfreien thermoplastischen Olefinen und erwähnt in diesem Zusammenhang, dass kostengünstiges Aluminiumhydroxid wegen seiner geringen Zersetzungstemperatur ungeeignet ist, da es zum Aufschäumen führt.

### Aufgabe

Die Aufgabe der vorliegenden Erfindung bestand demzufolge darin, ein flammgeschütztes thermoplastisches Polyurethan bereitzustellen, das gute mechanische Eigenschaften aufweist, in den üblichen Verfahren gut verarbeitbar ist, Flammschutzeigenschaften zeigt, die den industriellen Anforderungen entsprechen und gleichzeitig eine gute Hydrolysebeständigkeit und Alterungsbeständigkeit, insbesondere oxidative Alterungsbeständigkeit besitzt.

### Allgemeine Beschreibung der Erfindung

Die Aufgabe wurde überraschend gelöst durch ein flammgeschütztes thermoplastisches Polyurethan basierend auf mindestens einem Diisocyanat und mindestens einer mit Isocyanat reaktiven Substanz, und bevorzugt mindestens einem Kettenverlängerer, sowie optional mindestens einem Katalysator, enthaltend mindestens ein Flammschutzmittel, sowie optional Zusatzstoffe und/oder Hilfsstoffe, in dem mindestens ein Flammschutzmittel ein Metallhydroxid ist, das zumindest teilweise von einer Hülle bedeckt ist und das Metallhydroxid Aluminiumhydroxid, Aluminiumoxidhydroxid oder eine Mischung dieser Hydroxide ist und die Hülle um das Metallhydroxid auf einer Organosilanverbindung basiert. Durch die Verwendung der umhüllten Metallhydroxide konnte sowohl eine verbesserte mechanische Festigkeiten als auch eine verbesserte Alterungsbeständigkeit erreicht werden. Mechanische Festigkeit und Alterungsbeständigkeit beziehen sich auf das flammgeschützte thermoplastische Polyurethan. Diese Eigenschaften verbessern sich insbesondere auch in Verbindung mit den bevorzugten Ausführungsformen. Die Umhüllung wirkt sich in der Praxis nicht negativ auf die Flammschutzeigenschaft des thermoplastischen Polyurethans aus.

### Figuren

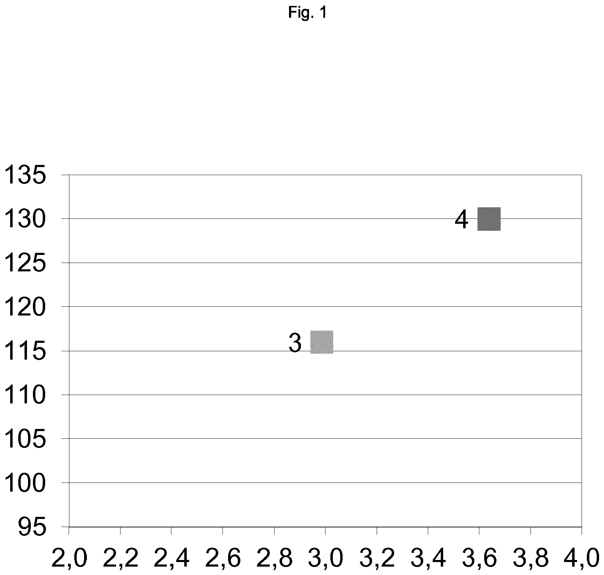

Figur 1 zeigt den Petrella Plot gemäß Beispiel 4 mit dem Die Ergebnisse der Cone Kalorimertermessungen der Versuchsnummern 3 und 4 graphisch dargestellt werden. In Richtung der x-Achse nimmt die Neigung des Materials zu einem schnell wachsenden Feuer beizutragen zu. Aufgetragen ist der Quotient PHRR/tig mit der Einheit [kW / m²s]. Auf der y-Achse ist die Neigung des Materials aufgetragen, zu einem lang anhaltenden Feuer beizutragen (THR) mit der Einheit [MJ/m²]. Dabei weisen Materialien mit besseren Flammfestigkeiten möglichst kleine x und y Werte auf. Der Plott zeigt eindrucksvoll, dass der erfindungsgemäße Versuch 3 deutlich bessere Flammfestigkeit als der Versuch 4 zeigt.

### Detaillierte Beschreibung

Das flammgeschützte thermoplastische Polyurethan basierend auf mindestens einem Diisocyanat und mindestens einer mit Isocyanat reaktiven Substanz, und bevorzugt mindestens einem Kettenverlängerer, sowie optional mindestens einem Katalysator, enthaltend mindestens ein Flammschutzmittel, sowie optional Zusatzstoffe und/oder Hilfsstoffe kann auch angesprochen werden als flammgeschützte Zubereitung auf Basis eines thermoplastischen Polyurethans, das das Reaktionsprodukt aus Diisocyanat, mindestens einer mit Isocyanat reaktiven Substanz, und bevorzugt mindestens einem Kettenverlängerer, sowie optional mindestens einem Katalysator ist, wobei die Zubereitung zusätzlich mindestens ein Flammschutzmittel enthält, sowie optional Zusatzstoffe und/oder Hilfsstoffe.

### Metallhydroxide

Erfindungsgemäße verwendete Metallhydroxide sind Hydroxide bzw. Doppelhydroxide des Aluminiums. Der Vorteil der Metallhydroxide besteht darin, dass sie im Brandfall ausschließlich Wasser freisetzen und daher keine toxischen oder korrosiven Rauchgasprodukte bilden. Darüber hinaus sind diese Hydroxide in der Lage, die Rauchgasdichte im Brandfall zu reduzieren. Nachteil dieser Substanzen ist jedoch, dass sie zum einen die Hydrolyse von thermoplastischen Polyurethanen fördern und zum anderen auch die oxidative Alterung der Polyurethane negativ beeinflussen.
Von oxidativer Alterung wird im Zusammenhang mit dieser Erfindung gesprochen, wenn sich bei den thermoplastischen Polyurethanen im Laufe der Zeit die mechanischen Parameter, wie Zugfestigkeit, Reißdehnung, Weiterreißfestigkeit, Flexibilität, Schlagfestigkeit, Weichheit etc. negativ verändern. Um den Alterungsprozess im Labor zu überprüfen, werden die mechanischen Parameter einmal vor Lagerung bei erhöhter Temperatur und einmal nach entsprechender Lagerung bestimmt. Bevorzugte Lagertemperaturen betragen 113 °C oder 121 °C bei denen 7 Tage gelagert wird. Andere Temperaturen und Zeiten sind in Abhängigkeit der Fragestellung möglich.

Um die für die verschiedenen Anwendungen notwendige Flammfestausrüstung zu erreichen, beträgt der Anteil der Metallhydroxide vorzugsweise etwa 10 Gew.-% bis 80 Gew.-%. Dieser Gewichtsanteil bezieht sich auf das Gesamtgewicht des flammgeschützten thermoplastischen Polyurethans enthaltend Flammschutzmittel, sowie optional Katalysator ohne weitere Zusatzstoffe und/oder Hilfsstoffe Bei höheren Füllgraden verschlechtern sich die mechanischen Eigenschaften der entsprechenden Polymerwerkstoffe in einer nicht akzeptablen Weise. So gehen insbesondere die für die Kabelisolierung wichtige Zugfestigkeit und Reißdehnung auf ein nicht akzeptables Maß zurück. Daher ist es vorteilhaft weitere Flammschutzmittel zuzusetzen, insbesondere solche, die Phosphor enthalten. Ist mindestens ein weiteres Flammschutzmittel in dem Polyurethan enthalten, so werden bevorzugt zwischen 10 Gew.-% und 65 Gew.-% , weiter bevorzugt zwischen 20 Gew.-% und 50 Gew.-%, weiter bevorzugt zwischen 25 Gew.-% und 40 Gew.-% vom Metallhydroxid eingesetzt. Auch dieser Gewichtsanteil bezieht sich auf das Gesamtgewicht des flammgeschützten thermoplastischen Polyurethans enthaltend Flammschutzmittel, sowie optional Katalysator, Zusatzstoffe und/oder Hilfsstoffe.
Bevorzugte Metallhydroxide sind Aluminiumhydroxid, Aluminiumoxidhydroxid sowie Mischungen hiervon. Eine bevorzugte Mischung ist Aluminiumhydroxid und Magnesiumhydroxid. Besonders bevorzugt ist Aluminiumhydroxid.
Die Metallhydroxide haben üblicherweise eine spezifische Oberfläche von 2 m²/g bis 150 m²/g, bevorzugt liegt die Oberfläche jedoch zwischen 2 m²/g und 9 m²/g, weiter bevorzugt zwischen 3 m²/g und 8 m²/g, besonders bevorzugt zwischen 3 m²/g und 5 m²/g.
Die spezifische Oberfläche wird mit dem BET Verfahren nach DIN ISO 9277:2003-05 mit Stickstoff bestimmt.

### Beschichtungsmaterialien:

Erfindungsgemäß ist die Oberfläche der Metallhydroxide zumindest teilweise von einer Hülle umgeben, auch als zumindest teilweise Umhüllung bezeichnet. Die Hülle ist gleichzusetzen mit dem häufig verwendeten Begriff "Coating" oder Oberflächenbehandlung. Die Hülle haftet entweder durch Formschluss oder van-der Waals-Kräften rein physikalisch auf dem Metallhydroxid, oder sie ist chemisch mit dem Metallhydroxid verbunden. Dies geschieht überwiegend durch kovalente Wechselwirkung.
Die Oberflächenbehandlung oder auch Oberflächenmodifikation, die zu einer Hülle um das eingeschlossene Teil, in vorliegendem Fall das Metallhydroxid, bevorzugt Aluminiumhydroxid, Aluminiumoxidhydroxid oder einer Mischung dieser Hydroxide, insbesondere bevorzugt das Aluminiumhydroxid, führt, wird ausführlich in der Literatur beschrieben. Ein Basiswerk in dem geeignete Materialien als auch die Beschichtungstechnik beschrieben wird, ist "Particulate-Filled Polymer Composites (2nd Edition), edited by: Rothon, Roger N., 2003, Smithers Rapra Technology. Besonders relevant ist das Kapitel 4. Entsprechende Materialien sind kommerziell erhältlich, z.B. bei der Firma Nabaltec, Schwandorf oder Martinswerke in Bergheim, beide in Deutschland.
Bevorzugte Beschichtungsmaterialien sind gesättigte oder ungesättigte Polymere mit Säurefunktion, bevorzugt mit mindestens einer Acrylsäure oder einem Säureanhydrid, bevorzugt Maleinsäureanhydrid, da sich diese besonders gut an die Oberfläche des Metallhydroxides anlagern.
Bei dem Polymer handelt es sich um ein Polymer oder Mischungen von Polymeren, bevorzugt ist ein Polymer. Bevorzugte Polymere sind Polymere von Mono- und Diolefinen, Mischungen hiervon, Copolymere von Mono- und Diolefinen untereinander oder mit anderen Vinylmonomeren, Polystyrol, Poly(p-methylstyrol), Poly-(alpha-methylstyrol), Copolymere von Styrol oder alpha-Methylstyrol mit Dienen oder Acrylderivaten, Propfcopolymere von Styrol oder alpha-Methylstyrol, halogenhaltige Polymere, Polymere, die sich von alpha-, beta-ungesättigten Säuren und deren Derivaten ableiten, und Copolymere dieser Monomere untereinander oder mit anderen ungesättigten Monomeren.

Ebenfalls bevorzugte Beschichtungsmaterialien sind monomere organische Säuren und ihre Salze, bevorzugt gesättigte Fettsäuren, weniger gebräuchlich sind ungesättigte Säuren. Bevorzugte Fettsäuren umfassen 10 bis 30 Kohlenstoffatome, bevorzugt 12 bis 22, insbesondere 16 bis 20 Kohlenstoffatom, sie sind aliphatisch und haben bevorzugt keine Doppelbindungen. Ganz besonders bevorzugt ist die Stearinsäure.

Bevorzugte Fettsäurederivate sind ihre Salze, bevorzugt Calcium, Aluminium, Magnesium oder Zink. Besonders bevorzugt ist Calcium, insbesondere als Calciumstearat.

### Organosilan-Verbindung

Stoffe die eine Hülle um das Metallhydroxid bilden, erfindungsgemäß Aluminiumhydroxid, Aluminiumoxidhydroxid oder ein Mischung dieser Hydroxide, weiter bevorzugt das Aluminiumhydroxid, sind Organosilanverbindungen mit folgendem Aufbau:

(R)₄₋ₙ --- Si --- Xₙ

mit n = 1, 2 oder 3. X ist eine hydrolysierbare Gruppe, die mit der Oberfläche des Metallhydroxides reagiert, auch als Kupplungsgruppe bezeichnet. Bevorzugt ist der Rest R ein Kohlenwasserstoffrest und ist so ausgewählt, dass die Orgnosilanverbindung gut mit dem TPU mischbar ist.
Der Rest R ist über eine hydrolytisch stabile Kohlenstoff-Silizium Verbindung mit dem Silicium verbunden und kann reaktiv sein oder inert. Ein Beispiel für einen reaktiven Rest, der bevorzugt ein ungesättigter Kohlenwasserstoffrest ist, ist ein Allylrest. Bevorzugt ist der Rest R inert, weiter bevorzugt ein gesättigter Kohlenstoffwasserstoffrest mit 2 bis 30 Kohlenstoffatomen, bevorzugt 6 bis 20 Kohlenstoffatomen und besonders bevorzugt 8 bis 18 Kohlenstoffatomen, weiter bevorzugt handelt es sich um einen aliphatischen Kohlenwasserstoffrest, der verzweigtkettig oder linear ist.

Weiter bevorzugt enthält die Organosilanverbindung nur einen Rest R und hat die allgemeine Formel:

R --- Si --- (X)₃

Bevorzugt ist die Kupplungsgruppe X ein Halogen, bevorzugt Chlor und demzufolge das Kupplungreaganz ein Tri-, Di- oder Monochlorsilan. Ebenfalls bevorzugt ist die Kupplungsgruppe X eine Alkoxy-Gruppe, bevorzugt eine Methoxy- oder eine Ethoxy-Gruppe.

Ganz bevorzugt ist der Rest das Hexadecyl-Radikal, bevorzugt mit der Methoxy- oder Ethoxy-Kupplungsgruppe, somit ist das Organosilan das Hexadecysilan.

Die Silane werden mit 0,1 Gew.-% bis 5 Gew.-%, weiter bevorzugt 0,5 Gew.-% bis 1,5 Gew.-% und besonders bevorzugt mit ca. 1 Gew. % bezogen auf die Gesamtmenge des Metallhydroxides auf dieses aufgebracht.

Carbonsäuren und -derivate werden mit 0,1 Gew.-% bis 5 Gew.-%, weitere bevorzugt mit 1,5 Gew. % bis 5 Gew. % und besonders bevorzugt mit 3 Gew.-% bis 5 Gew.-% bezogen auf die Gesamtmenge des Metallhydroxid auf dieses aufgebracht.
Von den teilweise mit einer Hülle umgebenen Metallhydroxiden, die bevorzugt als Pulver vorliegen, haben bevorzugt mehr als 50 %, weiter bevorzugt mehr als 70 %, weiter bevorzugt mehr als 90 % eine maximale Ausdehnung von weniger als 10 µm, bevorzugt weniger als 5 µm, besonders bevorzugt weniger als 3 µm. Gleichzeitig haben mindestens 50 % der Teilchen, bevorzugt mindestens 70 %, weiter bevorzugt mindestens 90 % zumindest eine maximale Ausdehnung von mehr als 0,1 µm, weiter bevorzugt von mehr als 0,5 µm und besonders bevorzugt mehr als 1 µm.

Bevorzugt werden bei der Herstellung der erfindungsgemäßen thermoplastischen Polyurethane Metallhydroxide verwendet, die bereits beschichtet sind. Nur so können ungewünschte Nebenreaktionen der Beschichtungsmaterialien mit den Bestandteilen des thermoplastischen Polyurethans vermieden werden und der Vorteil der Verhinderung des oxidativen Abbaus des thermoplastischen Polyurethans kommt besonders gut zum Tragen. Weiter bevorzugt kann die Beschichtung des Metallhydroxides auch im Einfüllbereich des Extruders erfolgen, bevor in einem flussabwärts gelegenen Teil des Extruders das Polyurethan zugegeben wird.

### P-Säure Derivate

In einer bevorzugten Ausführungsform ist in dem thermoplastischen Polyurethan zumindest ein weiteres Flammschutzmittel enthalten, das Phosphor enthält.

Dabei handelt es sich bevorzugt um Derivate der Phosphorsäure, Phosphonsäure oder Phosphinsäure. Bevorzugt handelt es sich bei diesen Derivaten um Salze mit organischem oder anorganischem Kation oder um organische Ester. Organische Ester sind Derivate der Phosphorhaltigen Säuren, bei denen zumindest ein direkt an den Phosphor gebundenes Sauerstoffatom mit einem organischen Rest verestert ist.
In einer bevorzugten Ausführungsform handelt es sich bei dem organischen Ester um einen Alkylester, in einer anderen bevorzugten Ausführungsform um einen Arylester. Besonders bevorzugt sind alle Hydroxygruppen der entsprechenden Phosphor-haltigen Säure verestert.

Organische Phosphatester sind bevorzugt, besonders die Triester, der Phosphorsäure, wie Trialkylphosphate und insbesondere Triarylphosphate, wie zum Beispiel Triphenylphosphat.

Bevorzugt werden erfindungsgemäß als Flammschutzmittel für die TPU Phosphorsäureester der allgemeinen Formel (I) 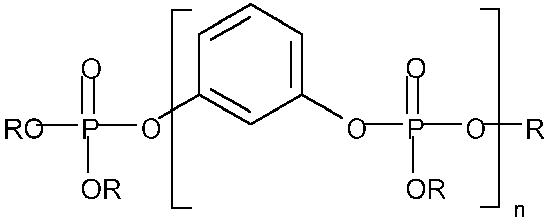 verwendet, wobei R für, gegebenenfalls substituierte, Alkyl-, Cycloalkyl- oder Phenylgruppen steht und n = 1 bis 15 bedeutet.

Steht R in der allgemeinen Formel (I) für einen Alkylrest, kommen insbesondere solche Alkylreste mit 1 bis 8 C-Atomen in Betracht. Als Beispiel für die Cycloalkylgruppen sei der Cyclohexyl-Rest genannt. Bevorzugt werden solche Phosphorsäureester der allgemeinen Formel (I) eingesetzt, bei denen R = Phenyl oder alkylsubstituiertes Phenyl bedeutet. n ist in der allgemeinen Formel (I) insbesondere 1 oder liegt vorzugsweise im Bereich von etwa 3 bis 6. Als Beispiele für die bevorzugten Phosphorsäureester der allgemeinen Formel (I) seien das 1,3-Phenylenbis-(diphenyl)phosphat, das 1,3-Phenylen-bis-(dixylenyl)phosphat sowie die entsprechenden oligomeren Produkte mit einem mittleren Oligomerisierungsgrad von n = 3 bis 6 genannt. Ein bevorzugtes Resorcinol ist Resorcinol bis-diphenylphosphat (RDP), das üblicherweise in Oligomeren vorliegt.

Weitere bevorzugt Phosphor-haltige Flammschutzmittel sind Bisphenol-A bis-(diphenylphosphat) (BDP), das üblicherweise als Oligomer vorliegt, und Diphenylkresylphosphat (DPK).

Bei den organischen Phosphonaten handelt es sich um Salze mit organischem oder anorganischem Kation oder um die Ester der Phosphonsäure. Bevorzugte Ester der Phosphonsäure sind die Diester von Alkyl- oder Phenylphosphonsäuren. Beispielhaft für die erfindungsgemäß als Flammschutzmittel einzusetzenden Phosphonsäureester seien die Phosphonate der allgemeinen Formel (II) 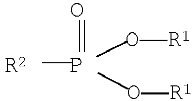 angeführt, wobei
R¹ für gegebenenfalls substituierte, Alkyl-, Cycloalkyl- oder Phenylgruppen steht, wobei die beiden Reste R1 auch cyclisch miteinander verknüpft sein können und
R²: für einen, gegebenenfalls substituierten, Alkyl-, Cycloalkyl- oder Phenylrest steht.

Besonders geeignet sind dabei cyclische Phosphonate wie z.B. 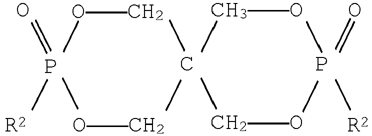
mit R² = CH₃ und C₆H₅, die sich vom Pentaerythrit ableiten, oder 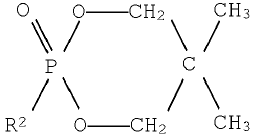
mit R² = CH₃ und C₆H₅, die sich vom Neopentylglykol ableiten, oder 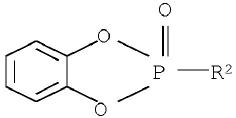
mit R² = CH₃ und C₆H₅, die sich vom Brenzkatechin ableiten, aber auch 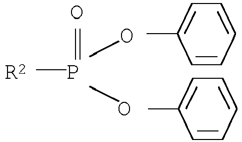
mit R² = einem unsubstituierten oder auch substituierten Phenylrest.

Phosphinsäureester haben die allgemeine Formel R¹R²(P=O)OR³, wobei alle drei organischen Gruppen R¹, R² und R³ gleich oder verschieden sein können. Die Reste R¹, R² und R³ sind entweder aliphatisch oder aromatisch und haben 1 bis 20 Kohlenstoffatome, bevorzugt 1 bis 10, weiter bevorzugt 1 bis 3. Bevorzugt ist zumindest einer der Reste aliphatisch, bevorzugt sind alle Reste aliphatisch, ganz besonders bevorzugt sind R¹ und R² Ethylreste. Weiter bevorzugt ist auch R³ ein Ethylrest oder ein Methylrest. In einer bevorzugten Ausführungsform sind R¹, R² und R³ gleichzeitig Ethylrest oder Methylreste.

Bevorzugt sind auch Phosphinate, d.h. die Salze der Phosphinsäure. Die Reste R¹ und R² sind entweder aliphatisch oder aromatisch und haben 1 bis 20 Kohlenstoffatome, bevorzugt 1 bis 10, weiter bevorzugt 1 bis 3. Bevorzugt ist zumindest einer der Reste aliphatisch, bevorzugt sind alle Reste aliphatisch, ganz besonders bevorzugt sind R¹ und R² Ethylreste. Bevorzugte Salze der Phosphinsäuren sind Al-, Ca-und/oder Zn-Salze. Eine bevorzugte Ausführungsform ist Diethylaluminiumphosphinat.

Die Phosphor-haltigen Flammschutzmittel, ihre Salze und/oder ihre Derivate werden als Einzelsubstanz oder in Mischungen verwendet. Ein weiteres Merkmal für einen geeigneten Flammschutz ist, dass der Gehalt an Phosphor berechnet auf das gesamte Flammschutzmittel größer als 5 Gew.-%, weiter bevorzugt größer als 7 Gew.-% ist. Gleichzeitig ist der Gehalt an Phosphor-haltigen Flammschutzmitteln geringer als 30 Gew.-%, bevorzugt kleiner als 20 Gew.-% und besonders bevorzugt kleiner als 15 Gew.-%.

Die Ester und/oder Salze der Phosphat-haltigen Säure werden bevorzugt alleine oder in Mischung untereinander zusammen mit mehreren oder einem Metallhydroxid, das Aluminiumhydroxid, Aluminiumoxidhydroxid oder eine Mischung dieser Hydroxide ist, eingesetzt, wobei ein Metallhydroxid bevorzugt Aluminiumhydroxid ist. Dabei werden entweder mehrere Phosporsäureester, Phosphonsäureester oder Phosphinsäureester oder deren Salze verwendet oder auch jeweils eine oder mehrere Phosporsäureester, Phosphonsäureester oder Phosphinsäureester oder deren Salze, die miteinander vermischt werden.
In einer weiter bevorzugten Ausführungsform liegt neben diesen hier beschriebenen Kombinationen von Metallhydroxid mit mindestens einem Ester und/oder Salz einer Phosphat-haltigen Säure, weiterhin Schichtsilikat und/oder Hydrotalkit im flammgeschützten thermoplastischen Polyurethan vor.

Eine besonders bevorzugte Kombination ist Resorcinol bis-diphenylphosphat (RDP), in üblicherweise seiner oligomeren Form mit Aluminiumhydroxid und einem Schichtsilikat und/oder Hydrotalkit.
Durch die Kombination der verschiedenen Flammschutzmittel werden mechanische Eigenschaften und Flammschutzeigenschaften auf die jeweilige Anforderung optimiert.

In der Erfindung werden die Phosphorsäureester, Phosphonsäureester und/oder Phospinsäureester und/oder deren Salze in Mischung zusammen mit mindestens einem Metallhydroxid als Flammschutzmittel für die TPU eingesetzt, wobei dann das Gewichtsverhältnis der Summe des Gewichts der eingesetzten Phosphatester, Phosphonatester und Phosphinatatester zu Metallhydroxid vorzugsweise im Bereich von 1:5 bis 1:2 liegt.

In einer bevorzugten Ausführungsform, in der in dem flammgeschützten thermoplastischen Polyurethan (TPU) mindestens als weitere Bestandteile ein zumindest teilweise umhülltes Metallhydroxid, das Aluminiumhydroxid, Aluminiumoxidhydroxid oder eine Mischung dieser Hydroxide ist, mindestens ein Phosphat-haltiges Flammschutzmittel und zumindest ein Schichtsilikat und/oder ein Hydrotalkit enthalten ist, ist die Summe der Gewichtsprozente (Gew.-%) dieser Bestanteile, in Summe auch als Flammschutzmittel angesprochen, in dem Polyurethan 10 Gew.-% bis 80 Gew.-%, bezogen auf das Polyurethan basierend auf mindestens einem Diisocyanat und mindestens einer mit Isocyanat reaktiven Substanz, und bevorzugt mindestens einem Kettenverlängerer, sowie gegebenenfalls mindestens einem Katalysator, ohne den Zusatz von weiteren Hilfs- oder Zusatzstoffen. Weiter bevorzugt ist diese Summe dieser Bestandteile zwischen 25 Gew.-% und 70 Gew.-%, weiter bevorzugt zwischen 40 Gew.-% und 60 Gew.-% und besonders bevorzugt zwischen 45 Gew.-% und 55 Gew.-%.

Alle weiteren Gewichtsangaben der Bestandteile beziehen sich ebenfalls immer auf das Polyurethan ohne weitere Zusatz und/oder Hilfsstoffe.

Sind die genannten drei Flammschutzmittel enthalten, ist weiter bevorzugt das mindestens eine Phosphor-haltige Flammschutzmittel zwischen 3 Gew.-% und 30 Gew.-% enthalten, weiter bevorzugt zwischen 5 Gew.-% und 20 Gew.-% und besonders bevorzugt zwischen 8 Gew.-% und 15 Gew.-%.

Gleichzeitig ist das mindestens eine Metallhydroxid bevorzugt zwischen 10 Gew.-% und 65 Gew. % bezogen auf das Polyurethan, bevorzugt zwischen 15 Gew.-% und 50 Gew.-% und besonders bevorzugt zwischen 25 Gew.-% und 40 Gew.-% enthalten.

Zusätzlich ist das Schichtsilikat und/oder Hydrotalkit mit 0,5 Gew.-% bis 20 Gew.-%, bevorzugt 3 Gew.-% bis 15 Gew.-%, und besonders bevorzugt mit 3 Gew.-% bis 8 Gew.-% enthalten. Weiter bevorzugt verhalten sich die Gewichtsanteile des mindestens einen Phosphor-haltigen Flammschutzmittel zu Metallhydroxid zu Schichtsilkat und/oder Hydrotalkit wie etwa 9 zu 34 zu 5.

In einer weiteren bevorzugten Ausführungsform ist das Phosphor-haltige Flammschutzmittel bei 21 °C flüssig.

### Schichtsilikate

Schichtsilicate werden auch Blatt- oder Phyllosilicate genannt. Zu den Zweischicht-Mineralen zählen vor allem Kaolinit und Serpentin, zu den Dreischicht-Mineralen vor allem Montmorillonit, aber auch die Glimmer. Wesentliche Vertreter der Phyllosilicate sind die Tonminerale, bevorzugt werden Bentonite verwendet.

In einer anderen bevorzugten Ausführungsform werden interkalierte Schichtsilikate eingesetzt. Ausgangsschichtsilikate für diese interkalierten Schichtsilikate sind bevorzugt quellfähige Smectite, wie Montmorillonit, Hectorit, Saponit, Beidellit bzw. Bentonit.

Weiter bevorzugt handelt es sich um organisch interkalierte Schichtsilicate, die einen Schichtabstand von etwa 1,5 nm bis 4 nm haben. Vorzugsweise sind diese Schichtsilicate mit quaternären Ammoniumverbindungen, protonierten Aminen, organischen Phosphoniumionen und/oder Aminocarbonsäuren interkaliert.

### Hydrotalkit

Als Alternative zu Schichtsilikaten und/oder in Mischungen mit diesen wird Hydrotalkit verwendet. Auch Hydrokalkit besitzt einen Schichtaufbau. Zu Hydrotalkit gehören auch Comblainit, Desautelsit, Pyroaurit, Reevesit, Sergeevit, Stichtit und Takovit. Ein bevorzugtes Hydrotalkite basiert auf Aluminium und Magnesium und ist mit Hydroxid, Nitrat und/oder Carbonationen in den Zwischenschichten neutralisiert. Ein bevorzugter Hydrotalkit weist die folgende Summenformel auf: Mg₆Al₂[(OH)₁₆|CO₃]•4H₂O.

Hydrotalkite sind bevorzugt organisch interkaliert, das heißt die Anionen, die sich in den Zwischenschichten befinden, bevorzugt Hydroxid-Anionen, werden zumindest teilweise durch organische Anionen ausgetauscht. Bevorzugt sind Fettsäuren und/oder hydrierte Fettsäuren.

Die organische Interkalierung verbessert die Verarbeitbarkeit. Bei der Vermischung mit den thermoplastischen Polyurethanen wird eine gleichmäßigere Verteilung der Schichtsilikate und/oder des Hydrotalkits erreicht.

### Thermoplastische Polyurethane (TPU)

Thermoplastische Polyurethane sind seit langem bekannt. Die Herstellung erfolgt durch Umsetzung der Komponenten (a) Isocyanaten und (b) gegenüber Isocyanaten reaktiven Verbindungen mit einem zahlenmittleren Molekulargewicht von 0,5 x 10³ g/mol bis 0,1 x 10⁶ g/mol und gegebenenfalls (c) Kettenverlängerungsmitteln mit einem Molekulargewicht von 0,05 x 10³ g/mol bis 0,499 x 10³ g/mol gegebenenfalls in Gegenwart von mindestens einem (d) Katalysator und/oder (e) üblichen Hilfsstoffen und/oder Zusatzstoffen. Herstellungsverfahren können auch den folgenden Schriften entnommen werden: EP 0922552, DE 10103424, WO 2006/072461

Die Komponenten (a) Isocyanat, (b) gegenüber Isocyanaten reaktive Verbindungen, (c) Kettenverlängerungsmittel werden einzeln oder zusammen auch als Aufbaukomponenten angesprochen.

Die Herstellung erfolgt auf einer Bandanlage oder einem Reaktionsextruder. In Abhängigkeit der stofflichen Eigenschaften der Komponente werden diese alle unmittelbar miteinander vermischt oder es werden einzelne Komponenten vorvermischt und/oder vorreagiert, z.B. zu Präpolymeren, und dann erst zur Polyaddition gebracht. In einer weiteren Ausführungsform wird zunächst ein thermoplastisches Polyurethan aus den Aufbaukomponenten, ggf. mit Katalysator hergestellt, in das ggf. noch Hilfsstoffe eingearbeitet sein können. In dieses Material wird dann wenigstens ein Flammschutzmittel eingebracht und homogen verteilt. Das homogene Verteilen erfolgt vorzugsweise in einem Extruder, bevorzugt in einem Zweiwellenextruder.

Zur Einstellung von Härte der TPU können die eingesetzten Mengen der Aufbaukomponenten (b) und (c) in relativ breiten molaren Verhältnissen variiert werden, wobei die Härte mit zunehmendem Gehalt an Kettenverlängerungsmittel (c) ansteigt.

Zur Herstellung von TPU, z.B. solchen mit einer Härte Shore A von kleiner als 95, vorzugsweise von 95 bis 75 Shore A besonders bevorzugt etwa 85 A, können beispielsweise die im wesentlichen difunktionellen Polyhydroxylverbindungen (b) und Kettenverlängerer (c) vorteilhafterweise in Molverhältnissen von 1:1 bis 1:5, vorzugsweise 1:1,5 bis 1:4,5 verwendet werden, so dass die resultierenden Mischungen aus den Aufbaukomponenten (b) und (c) ein Hydroxyläquivalentgewicht von größer als 200, und insbesondere von 230 bis 450, besitzen, während zur Herstellung von härteren TPU, z.B. solchen mit einer Härte Shore A von größer als 98, vorzugsweise von 55 bis 75 Shore D, die Molverhältnisse von (b):(c) im Bereich von 1:5,5 bis 1:15, vorzugsweise von 1:6 bis 1:12, liegen, so dass die erhaltenen Mischungen aus (b) und (c) ein Hydroxyläquivalentgewicht von 110 bis 200, vorzugsweise von 120 bis 180, aufweisen.

Bevorzugte Polyole sind Polyether, weiter bevorzugt handelt es sich bei den Ethern um Polytetrahydrofuran (PTHF).

Zur Herstellung der erfindungsgemäßen TPU werden die Aufbaukomponenten (a), (b) und (c) bevorzugt in Gegenwart von Katalysatoren (d) und gegebenenfalls Hilfsmitteln und/ oder Zusatzstoffen (e) in solchen Mengen zur Reaktion gebracht, dass das Äquivalenzverhältnis von NCO-Gruppen der Diisocyanate (a) zur Summe der Hydroxylgruppen der Aufbaukomponenten (b) und (c) 0,9 bis 1,1 : 1, vorzugsweise 0,95 bis 1,05 : 1 und insbesondere ungefähr 0,96 bis 1,0 : 1 beträgt.

In einer Ausführungsform werden TPU und Flammschutzmittel in einem Arbeitsschritt verarbeitet. In anderen bevorzugten Ausführungsformen wird zunächst mit einem Reaktionsextruder, einer Bandanlage oder sonstigen geeigneten Vorrichtungen ein TPU, bevorzugt als-Granulat hergestellt, in das dann in mindestens einem weiteren Arbeitsschritt, oder auch mehreren Arbeitsschritten, mindestens ein weiteres Flammschutzmittel eingebracht wird, das ein Metallhydroxid ist, das zumindest teilweise von einer Hülle bedeckt ist, und das Metallhydroxid Aluminiumhydroxid, Aluminiumoxidhydroxid oder eine Mischung dieser Hydroxide, bevorzugt Aluminiumhydroxid ist. Das Vermischen des thermoplastischen Polyurethans mit dem mindestens einen Metallhydroxid, gegebenenfalls weiterhin mit mindestens einem Phosphor-haltigen Flammschutzmittel, und gegebenenfalls weiterhin mindestens einem Schichtsilikat und/oder Hydrotalkit erfolgt in einer Mischeinrichtung, die bevorzugt ein Innen-Kneter oder ein Extruder, bevorzugt ein Zweiwellenextruder, ist. In einer bevorzugten Ausführungsform ist zumindest ein in die Mischeinrichtung in dem mindestens einem weiteren Arbeitsschritt eingebrachte Flammschutzmittel flüssig, d.h. flüssig bei einer Temperatur von 21 °C. In einer anderen bevorzugten Ausführungsform der Verwendung eines Extruder ist das eingebrachte Flammschutzmittel bei einer Temperatur flüssig, die in Fließrichtung des Füllgutes in dem Extruders hinter dem Einfüllpunkt herrscht.

Vorzugsweise werden erfindungsgemäß TPU hergestellt, bei denen das TPU ein zahlenmittleres Molekulargewicht von mindestens 0,02 x 10⁶ g/mol, bevorzugt von mindestens 0,06 x 10⁶ g/mol und insbesondere größer als 0,08 x 10⁶ g/mol aufweist. Die Obergrenze für das zahlenmittlere Molekulargewicht der TPU wird in aller Regel durch die Verarbeitbarkeit wie auch das gewünschte Eigenschaftsspektrum bestimmt. Gleichzeitig liegt das zahlenmittlere Molekulargewicht der TPU erfindungsgemäß nicht über etwa 0,2 x 10⁶ g/mol, bevorzugt 0,15 x 10⁶ g/mol.

Als organische Isocyanate (a) werden bevorzugt aliphatische, cycloaliphatische, araliphatische und/oder aromatische Isocyanate eingesetzt, weiter bevorzugt Tri-, Tetra-, Penta-, Hexa-, Hepta- und/oder Oktamethylendiisocyanat, 2-Methyl-pentamethylen-diisocyanat-1,5, 2-Ethylbutylen-diisocyanat-1,4, Pentamethylen-diisocyanat-1,5, Butylen-diisocyanat-1,4, 1-Iso-cyanato-3,3,5-trimethyl-5-isocyanatomethyl-cyclohexan (Isophoron-diisocyanat, IPDI), 1,4-und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethandiisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat. Besonders bevorzugt wird 4,4' MDI eingesetzt.

Als gegenüber Isocyanaten reaktive Verbindungen (b) werden bevorzugt Polyesterole oder Polyetherole verwendet, die üblicherweise auch unter dem Begriff "Polyole" zusammengefaßt werden. Die zahlenmittleren Molekulargewichte dieser Polyole liegen zwischen 0,5x10³g/mol und 8 x 10³ g/mol, bevorzugt zwischen 0,6 x 10³ g/mol und 5 x 10³ g/mol, insbesondere zwischen 0,8 x 10³ g/mol und 3 x 10³ g/mol. Bevorzugt haben die Polyole eine mittlerer Funktionalität zwischen 1,8 und 2,3, bevorzugt zwischen 1,9 und 2,2, insbesondere 2. Bevorzugt weisen die Polyole (b) nur primäre Hydroxylgruppen auf. Weiter bevorzugt handelt es sich bei den Polyolen um Polyetherole, ganz besonder bevorzugt um Polytetrahydrofuran (PTHF).

Als Kettenverlängerungsmittel (c) können bevorzugt aliphatische, araliphatische, aromatische und/oder cycloaliphatische Verbindungen mit einem Molekulargewicht von 0,05 kg/mol bis 0,499 kg/mol, bevorzugt 2-funktionelle Verbindungen, eingesetzt werden, beispielsweise Diamine und/oder Alkandiole mit 2 bis 10 C-Atomen im Alkylenrest, Di-, Tri-, Tetra-, Penta-, Hexa-, Hepta-, Okta-, Nona- und/oder Dekaalkylenglykole mit 3 bis 8 Kohlenstoffatomen insbesondere 1,2-Ethylenglydkol, 1,3-Propandiol, 1,4-Butandiol, 1,6-Hexandiol, bevorzugt entsprechende Oligo- und/oder Polypropylenglykole, wobei auch Mischungen der Kettenverlängerer eingesetzt werden können. Bevorzugt haben die Verbindungen (c), auch als Kettenverlängerungsmittel angesprochen, nur primäre Hydroxylgruppen, ganz besonders bevorzugt ist 1,4-Butandiol.

Katalysatoren (d), welche insbesondere die Reaktion zwischen den NCO-Gruppen der Diisocyanate (a) und den Hydroxylgruppen der gegenüber Isocyanaten reaktiven Verbindung (b) und dem Kettenverlängerungsmittel (c) beschleunigen, sind in einer bevorzugten Ausführungsform tertiären Amine, insbesonder Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan, in einer anderen bevorzugten Ausführungsform sind dies organische Metallverbindungen wie Titansäureester, Eisenverbindungen, bevorzugt Eisen-(III)- acetylacetonat, Zinnverbindungen, bevorzugt Zinndiacetat, Zinndioctoat, Zinndilaurat oder die Zinndialkylsalze aliphatischer Carbonsäuren, bevorzugt Dibutylzinndiacetat, Dibutylzinndilaurat oder Wismutsalzen in denen Wismut bevorzugt in den Oxidationsstufen 2 oder 3 vorliegt, insbesondere 3. Bevorzugt sind Salze von Carbonsäuren. Als Carbonsäuren werden bevorzugt Carbonsäuren mit 6 bis 14 Kohlenstoffatomen, besonders bevorzugt mit 8 bis 12 Kohlenstoffatomen verwendet. Beispiele für geeignete Wismutsalze sind Wismut(III)-neodecanoat, Wismut-2-etyhlhexanoat und Wismut-octanoat.

Die Katalysatoren (d) werden bevorzugt in Mengen von 0,0001 bis 0,1 Gew.-Teilen pro 100 Gew.-Teile der mit Isocyanten reakiven Verbindung (b) eingesetzt. Bevorzugt werden Zinnkataylsatoren eingesetzt, insbesondere Zinndioktoat.

Neben Katalysatoren (d) können den Aufbaukomponenten (a) bis (c) auch übliche Hilfsstoffe (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Ein besonders bevorzugtes thermoplastisches Polurethan ist hergestellt aus 2,2'-, 2,4'-und/oder 4,4'-Diphenylmethandiisocyanat (MDI), bevorzugt 4,4'-Diphenylmethandiisocyanat, dem Kettenverlängerer 1,4-Butandiol, Polytetrahydrofuran (PTHF) mit einem zahlenmittleren Molekulargewicht von ca. 1 x 10³ g/mol. Hergestellt wird dieses thermolastische Polyurethan bevorzugt mit dem Polymerisationskatalysator Zinndioctoat.

Die vorliegende Erfindung betrifft auch die Verwendung der erfindungsgemäßen flammgeschützten thermoplastischen Polyurethane (TPU) bzw. der flammgeschützten Zubereitung zur Herstellung von Beschichtungen, Dämpfungselementen, Faltenbälgen, Folien oder Fasern, Formkörpern, Fußböden für Gebäude und Transport, "non woven" Geweben, bevorzugt Dichtungen, Rollen, Schuhsohlen, Schläuchen, Kabeln, Kabelstecker, Kabelummantelungen, Kissen, Laminaten, Profilen, Riemen, Sättel, Schäumen, Steckverbindungen, Schleppkabeln, Solarmodulen, Verkleidungen in Automobilen, Wischerblättern. Bevorzugt ist die Verwendung für Kabelummantelungen. Die Herstellung erfolgt, bevorzugt aus Granulaten, durch Spritzguss, Kalendrieren, Pulversintern, oder Extrusion und/oder durch zusätzliches Schäumen des TPU.

Ein weiterer Erfindungsgegenstand ist die Verwendung von Mischungen, enthaltend Metallhydroxiden, die zumindest teilweise umhüllt sind, bevorzugt Aluminiumoxidhydroxid und/oder Aluminiumhydroxid, besonders bevorzugt Aluminiumhydroxid als Flammschutzmittel in Polyurethan, bevorzugt in thermoplastischem Polyurethan.

Die Nachfolgenden Beispiele dienen der Veranschaulichung der Erfindung, sind aber in keiner Weise einschränkend hinsichtlich des Erfindungsgedanken zu betrachten.

### Beispiele

An Beispielen wird nun die verbesserte Alterungsbeständigkeit der erfindungsgemäßen Zusammensetzungen mit umhüllten Metallhydroxidpartikeln gezeigt.

### Beispiel 1 (Einsatzstoffe)

Elastollan 1185A10: TPU der Shore Härte 85A der BASF Polyurethanes GmbH, Elastogranstrasse 60, 49448 Lemförde, basiert auf Polytetrahydrofuran (PTHF) 1000, 1,4-Butandiol, MDI.
Martinal OL 104 LEO: Aluminiumhydroxid ohne Coating, Martinswerk GmbH, Kölner Strasse 110, 50127 Bergheim, Al(OH)₃-Gehalt [%] ≈ 99.4, Teilchengröße (Laserbeugung, Cilas) [µm] D50: 1.7 - 2.1; Spezifische Oberfläche (BET) [m²/g]: 3 - 5.
Apyral 40 CD: Aluminiumhydroxid ohne Coating, Nabaltec AG, Alustrasse 50 - 52 D-92421 Schwandorf, Al(OH)₃-Gehalt [%] ≈ 99.5, Teilchengröße (Laserbeugung) [µm] D50: 1,3, Spezifische Oberfläche /Specific Surface Area (BET) [m²/g]: 3,5.
Apyral 40 HS1: Aluminiumhydroxid mit einem hydrophoben Oberflächencoating basierend auf ca. 1% Hexadecylsilan, Nabaltec AG, Alustrasse 50 - 52, D-92421 Schwandorf, Al(OH)₃-Gehalt [%] ≈ 99.5, Teilchengröße (Laserbeugung) [µm] D50: 1,4, Spezifische Oberfläche /Specific Surface Area (BET) [m²/g]: 3,5.
Magnifin H5 MV: Magnesiumhydroxid mit einem hydrophoben Oberflächencoating, Martinswerk GmbH, Kölner Strasse 110, 50127 Bergheim, Mg(OH)₂-Gehalt [%] > 99.8, Teilchengröße (Laserbeugung) [µm] D50: 1,6-2; Spezifische Oberfläche (BET) [m²/g]: 2-5
Nanofil 15: organisch modifiziertes nano-dispergierbares Schichtsilikat auf Basis natürlicher Bentonite, Rockwood Clay Additives GmbH, Stadtwaldstraße 44, D-85368 Moosburg, Pulver, mittlere Korngröße D50, d.h. mindestens 50 % der Teilchen sind kleiner als 40µm.
Fyrolflex RDP: Resorcinol bis (diphenyl phosphat), CAS #: 125997-21-9,
Supresta Netherlands B.V., Office Park De Hoef, Hoefseweg 1, 3821 AE Amersfoort The Netherlands.

### Beispiel 2 (Alterungsbeständigkeit)

Um die oxidative Alterungsbeständigkeit zu bewerten, wird ein Probekörper bei 113 °C für 7 Tage und bei 121 °C für 7 Tage in einem Umluftofen gelagert und anschließend mechanische Parameter bestimmt. Die Ergebnisse sind in den nachfolgenden Tabellen 2 und 3 zusammengefasst.

### Beispiel 3 (Zusammensetzungen)

In den nachfolgenden Tabellen werden Zusammensetzungen aufgeführt, in denen der einzelnen Einsatzstoffe in Gewichtsanteilen (GT) angegeben sind. Die Mischungen wurden jeweils mit einem Doppelwellen-extruder Typ ZE 40 A der Fa. Berstorff mit einer Verfahrensteillänge von 35 D unterteilt in 10 Gehäuse hergestellt und anschließend mit einem Einwellen-extruder Typ Arenz mit einer Dreizonenschnecke mit Mischteil (Schneckenverhältnis 1:3) zu Folien mit einer Dicke von 1,6 mm extrudiert.

**Tabelle 1**

| Versuchsnummer | | 1 | 2 | 3 | 4 | 5 |
|---|---|---|---|---|---|---|
| | Gewichts teile [GT] | Vergleichsbeispiel | Vergleichsbeispiel | erfindungsgemäße Mischung | Vergleichsbeispiel | Vergleichsbeispiel |
| | | | | | | |
| Elastollan 1185A10 | [GT] | 51 | 51 | 51 | 51 | 51 |
| Fyrolflex RDP | [GT] | 10 | 10 | 10 | 10 | 10 |
| Nanofil 15 | [GT] | 5 | 5 | 5 | 5 | 5 |
| Martinal OL 104 LEC | [GT] | 34 | | | | 17 |
| Apyral 40 CD | [GT] | | 34 | | | |
| Apyral 40 HS1 | [GT] | | | 34 | | |
| Magnifin H5MV | [GT] | | | | 34 | 17 |

**Tabelle 2**

| | Versuchsnummern: | | 1 | 2 | 3 | 4 | 5 |
|---|---|---|---|---|---|---|---|
| Eigenschaften | Vorschrift | Einheit | | | | | |
| Zugfestigkeit | DIN 53504 | [MPa] | 26 | 22 | 26 | 29 | 29 |
| Reissdehnung | | [%] | 660 | 650 | 610 | 570 | 570 |

| Nach Alterung 7d/ 113°C | | | | | | | |
|---|---|---|---|---|---|---|---|
| Zugfestigkeit | DIN 53504 | [MPa] | 16 | 15 | 21 | 25 | 22 |
| Änderung Zugfestigkeit | | [%] | -38 | -32 | -19 | -14 | -24 |
| Reissdehnung | DIN 53504 | [%] | 650 | 700 | 730 | 690 | 690 |
| Änderung Reißdehnung | | [%] | +14 | +8 | +20 | +21 | +21 |

**Tabelle 3**

| Eigenschaften | | | 1 | 2 | 3 | 4 | 5 |
|---|---|---|---|---|---|---|---|
| Zugfestigkeit | DIN 53504 | [MPa] | 24 | 22 | 29 | 29 | 29 |
| Reissdehnung | | [%] | 660 | 640 | 610 | 570 | 570 |

| Nach Alterung 7d/ 121 °C | | | | | | | |
|---|---|---|---|---|---|---|---|
| Zugfestigkeit | DIN 53504 | [MPa] | 10 | 9 | 17 | 21 | 19 |
| Änderung Zugfestigkeit | | [%] | -58 | -59 | -41 | -28 | -34 |
| Reissdehnung | DIN 53504 | [%] | 430 | 450 | 610 | 660 | 650 |
| Änderung Reißdehnung | | [%] | -35 | -30 | 0 | 16 | 14 |

Die Mischungen 1 und 2 sind Vergleichsbeispiele, in denen Metallhydroxide eingesetzt wurden, die nicht umhüllt waren.

Die Mischungen 3-5 zeigen, dass der Einsatz von umhüllten Metallhydroxiden den Festigkeitsabfall durch Wärmebehandlung signifikant verringert, d.h. die oxidative Alterungsbeständigkeit deutlich verbessern. Der Effekt tritt auch auf, wenn die Mischung zusätzlich zum umhüllten Metallhydroxid noch Phosphorsäureester und Schichtsilikat enthält.

### Beispiel 4 (Flammwidrigkeit)

Um die Flammwidrigkeit zu bewerten, wird ein Probekörper mit 5 mm Dicke horizontal bei einer Strahlungsintensität von 35 kW/m² im Cone Kalorimeter nach der ISO 5660 Teil 1 und Teil 2 (2002-12) geprüft.

Die Prüfkörper für die Cone Messungen mit Abmessungen von 200x150x5 mm wurden an einer Arburg 520S mit einem Schneckendurchmesser von 30 mm spritzgegossen (Zone1 - Zone 3 180°C, Zone 4-Zone 6 185°C). Die Platten wurden dann auf die für die Cone Messung nötige Größe gesägt.

**Tabelle 4**

| | **versuchsnummern:** | | 3 | 4 |
|---|---|---|---|---|
| **Ligenschaften** | Vorschrift | Einheit | | |
| Zündzeitpunkt | ISO 5660 Teil 1 | [s] | 72 | 80 |
| (Time to Ignition) | | | | |
| Gesamte Wärmefreisetzung | | [MJ/m²] | 116 | 130 |
| (THR, Total Heat Release) | | | | |
| "Maximale Wärmefreisetzung | | [kW/m²] | 215 | 291 |
| (PHRR, Peak of Heat Release Rate) | | | | |
| PHRR/tig | | [kW/m²s] | 2,99 | 3,64 |

Die Tabelle 4 gibt die Ergebnisse der Cone Kalorimetermessung des erfindungsgemäßen Versuchs 3 im Vergleich zu Versuch 4, in dem Magnesiumhydroxid als Flammschutzmittel eingesetzt wurde, wieder.
Nach Petrella (Petrella R.V., The assessment of full scale fire hazards from cone calori-meter data, Journal of Fire Science, 12 (1994), p. 14) ist der Quotient aus maximaler Wärmefreisetzung und Zündzeitpunkt ein Maß dafür, wie das entsprechende Material zu einem schnell wachsenden Feuer beiträgt. Weiterhin ist die gesamte Wärmefreisetzung ein Maß dafür, wie das entsprechende Material zu einem lang anhaltenden Feuer beiträgt.
Die Ergebnisse der Cone Kalorimertermessungen der Versuchsnummern 3 und 4 wurden in einem Petrellaplot graphisch dargestellt, der in Fig. 1 wiedergegeben ist. In Richtung der x-Achse nimmt die Neigung des Materials zu einem schnell wachsenden Feuer beizutragen zu. Aufgetragen ist der Quotient PHRR/tig mit der Einheit [kW / m²s]. Auf der y-Achse ist die Neigung des Materials aufgetragen, zu einem lang anhaltenden Feuer beizutragen (THR) mit der Einheit [MJ/m²]. Dabei weisen Materialien mit besseren Flammfestigkeiten möglichst kleine xund y-Werte auf. Die Ergebnisse sind sowohl in der Tabelle 4 als auch im Petrella Plot gemäß Figur 1 zusammengefasst.

## Patentansprüche

1. Flammgeschütztes thermoplastisches Polyurethan basierend auf mindestens einem Diisocyanat und mindestens einer mit Isocyanat reaktiven Substanz, und bevorzugt mindestens einem Kettenverlängerer, sowie optional mindestens einem Katalysator, enthaltend mindestens ein Flammschutzmittel, sowie optional Zusatzstoffe und/oder Hilfsstoffe,
**dadurch gekennzeichnet, dass**
ein Flammschutzmittel ein Metallhydroxid ist, das zumindest teilweise von einer Hülle umgeben ist und das Metallhydroxid Aluminiumhydroxid, Aluminiumoxidhydroxid oder eine Mischung dieser Hydroxide ist und die Hülle um das Metallhydroxid auf einer Organosilanverbindung basiert.

2. Polyurethan nach Anspruch 1,
**dadurch gekennzeichnet, dass**
als weiteres Flammschutzmittel mindestens ein Phosphor-haltiges Flammschutzmittel enthalten ist, das ein Derivat der Phosphorsäure, Phosphonsäure und/oder Phosphinsäure ist.

3. Polyurethan nach Anspruch 2
**dadurch gekennzeichnet, dass**
das Phosphor-haltige Flammschutzmittel bei 21 °C flüssig ist.

4. Polyurethan nach einem der vorherigen Ansprüche, **dadurch gekennzeichnet, dass** das Metallhydroxid Aluminiumhydroxid ist.

5. Polyurethan nach vorangegangenem Anspruch,
**dadurch gekennzeichnet, dass** das Metallhydroxid eine spezifische Oberfläche von 2 m²/g bis 9 m²/g aufweist.

6. Polyurethan nach einem der vorherigen Ansprüche,
**dadurch gekennzeichnet, dass**
mehr als 50 % der zumindest teilweise mit einer Hülle umgebenen Metallhydroxide, eine maximale Ausdehnung von weniger als 10 µm haben.

7. Polyurethan nach einem der vorherigen Ansprüche, **dadurch gekennzeichnet, dass** die Hülle auf Hexadecylsilan basiert.

8. Polyurethan nach einem der vorherigen Ansprüche,
**dadurch gekennzeichnet, dass**
weiterhin Hydrotalkit und/oder Schichtsilikat enthalten ist.

9. Polyurethan nach einem der vorherigen Ansprüche, **dadurch gekennzeichnet, dass** das Schichtsilikat ein organisch interkaliertes Schichtsilikat oder ein organisch interkalierter Hydrotalkit ist.

10. Polyurethan nach Ansprüchen 8 oder 9,
**dadurch gekennzeichnet, dass** die Summe der Gewichtsprozente (Gew.- %) aller Flammschutzmittel und dem Schichtsilikat und/oder dem Hydrotalkit in dem Polyurethan 10 Gew.-% bis 80 Gew.-% beträgt und diese Gewichtsprozent bezogen sind auf die Summe des Gewichts des mindestens einen Diisocyanats, der mindestens einen mit Isocyanat reaktiven Substanz, und gegebenenfalls mindestens einem Kettenverlängerer, sowie gegegebenenfalls mindestens einem Katalysator.

11. Polyurethan nach vorherigem Anspruch,
**dadurch gekennzeichnet, dass**
sich das Verhältnis des Gewichts von Phosphor-haltigem Flammschutzmittel zu Metallhydroxid zu Schichtsilkat und/oder Hydrotalkit verhält wie 9 zu 34 zu 5.

12. Polyurethan nach einem der vorherigen Ansprüche,
**dadurch gekennzeichnet, dass**
die mit Isocyanat reaktive Substanz ein zahlenmittleres Molekulargewicht zwischen 500 g/Mol und 6 x 10³ g/Mol, bevorzugt zwischen 0,8 x 10³ g/Mol und 2 x 10³ g/Mol, weiter bevorzugt zwischen 0,95 x 10³ g/Mol und 1.5 x 10³ g/Mol besitzt.

13. Polyurethan nach Anspruch 12,
**dadurch gekennzeichnet, dass**
die mit Isocyanat reaktive Substanz ein Polyetherpolyol ist.

14. Verwendung von einem Polyurethan nach einem der vorherigen Ansprüche für die Herstellung von Kabelummantelungen.

15. Verfahren zur Herstellung eines thermoplastischen Polyurethans basierend auf einer Mischung aus mindestens einem Diisocyanat und mindestens einer mit Isocyanat reaktiven Substanz, und bevorzugt mindestens einem Kettenverlängerer, gegebenenfalls mindestens einen Katalysator, enthaltend mindestens ein Flammschutzmittel, sowie optional Zusatzstoffe und/oder Hilfsstoffe,
**dadurch gekennzeichnet, dass**
in einem ersten Schritt ein thermoplastischen Polyurethans basierend auf einer Mischung aus mindestens einem Diisocyanat und mindestens einer mit Isocyanat reaktiven Substanz, und bevorzugt mindestens einem Kettenverlängerer, sowie optional mindestens einem Katalysator und/oder Zusatzstoffe und/oder Hilfsstoffe hergestellt wird, bevorzugt als Granulat,
und zu diesem thermoplastischen Polyurethan in mindestens einem weiteren Schritt, bevorzugt in einem Zweiwellenextruder, mindestens ein Flammschutzmittel zugegeben wird, das ein Metallhydroxid ist, das zumindest teilweise von einer Hülle bedeckt ist und das Metallhydroxid Aluminiumhydroxid, Aluminiumoxidhydroxid oder eine Mischung dieser Hydroxide ist und die Hülle um das Metallhydroxid auf einer Organosilanverbindung basiert..

16. Verfahren zur Herstellung eines Polyurethans nach dem vorherigen Anspruch
**dadurch gekennzeichnet, dass**
ein zweites, bei 21 °C flüssiges Phosphor-enthaltendes Flammschutzmittel zu der Mischung gegeben wird.

17. Verwendung eines Metallhydroxids, das zumindest teilweise von einer Hülle umgeben ist als Flammschutzmittel in einem thermoplastischen Polyurethan, wobei das Metallhydroxid Aluminiumhydroxid, Aluminiumoxidhydroxid oder eine Mischung dieser Hydroxide ist und die Hülle um das Metallhydroxid auf einer Organosilanverbindung basiert.

## Claims

1. A flame-retardant thermoplastic polyurethane based on at least one diisocyanate and on at least one substance reactive toward isocyanate, and preferably on at least one chain extender, and also optionally on at least one catalyst, comprising at least one flame retardant, and also optionally additives and/or auxiliaries,
wherein
one flame retardant is a metal hydroxide at least to some extent surrounded by a coating and the metal hydroxide is aluminum hydroxide, aluminum oxide hydroxide or a mixture of these hydroxides and the coating around the metal hydroxide is based on an organosilane compound.

2. The polyurethane according to claim 1,
wherein
the material comprises, as further flame retardant, at least one phosphorus-containing flame retardant which is a derivative of phosphoric acid, phosphonic acid, and/or phosphinic acid.

3. The polyurethane according to claim 2,
wherein
the phosphorus-containing flame retardant is liquid at 21°C.

4. The polyurethane according to any of the preceding claims, wherein the metal hydroxide is aluminum hydroxide.

5. The polyurethane according to the preceding claim, wherein the specific surface area of the metal hydroxide is from 2 m²/g to 9 m²/g.

6. The polyurethane according to any of the preceding claims,
wherein
the maximum dimension of more than 50% of the metal hydroxides surrounded at least to some extent by a coating is less than 10 µm.

7. The polyurethane according to any of the preceding claims, wherein the coating is based on hexadecylsilane.

8. The polyurethane according to any of the preceding claims,
wherein
the material further comprises hydrotalcite and/or phyllosilicate.

9. The polyurethane according to any of the preceding claims, wherein the phyllosilicate is an organically intercalated phyllosilicate or an organically intercalated hydrotalcite.

10. The polyurethane according to claim 8 or 9,
wherein the sum of the percentages by weight (% by weight) of all of the flame retardants and the phyllosilicate and/or the hydrotalcite in the polyurethane is from 10% by weight to 80% by weight, and these percentage by weight values are based on the total weight of the at least one diisocyanate, of the at least one substance reactive toward isocyanate, and optionally at least one chain extender, and optionally at least one catalyst.

11. The polyurethane according to the preceding claim,
wherein
the ratio of the weight of phosphorus-containing flame retardant to metal hydroxide to phyllosilicate and/or hydrotalcite is 9 to 34 to 5.

12. The polyurethane according to any of the preceding claims,
wherein
the number-average molar mass of the substance reactive toward isocyanate is from 500 g/mol to 6 x 10³ g/mol, preferably from 0.8 x 10³ g/mol to 2 x 10³ g/mol, more preferably from 0.95 x 10³ g/mol to 1.5 x 10³ g/mol.

13. The polyurethane according to claim 12,
wherein
the substance reactive toward isocyanate is a polyether polyol.

14. The use of a polyurethane according to any of the preceding claims for producing cable sheathing.

15. A process for producing a thermoplastic polyurethane based on a mixture of at least one diisocyanate and of at least one substance reactive toward isocyanate, and preferably of at least one chain extender, and optionally at least one catalyst, comprising at least one flame retardant, and also optionally additives and/or auxiliaries,
wherein
it comprises producing, in a first step, preferably in the form of granules, a thermoplastic polyurethane based on a mixture of at least one diisocyanate and of at least one substance reactive toward isocyanate, and preferably of at least one chain extender, and also optionally of at least one catalyst, and/or additives and/or auxiliaries,
and, in at least one further step, adding, to this thermoplastic polyurethane, preferably in a twinscrew extruder, at least one flame retardant which is a metal hydroxide coated at least to some extent by a coating and the metal hydroxide is aluminum hydroxide, aluminum oxide hydroxide or a mixture of these hydroxides and the coating around the metal hydroxide is based on an organosilane compound.

16. The process for producing a thermoplastic polyurethane according to the preceding claim, wherein
a second flame retardant, liquid at 21°C and comprising phosphorus, is added to the mixture.

17. The use of a metal hydroxide surrounded at least to some extent by a coating as flame retardant in a thermoplastic polyurethane, wherein the metal hydroxide is aluminum hydroxide, aluminum oxide hydroxide or a mixture of these hydroxides and the coating around the metal hydroxide is based on an organosilane compound.

## Revendications

1. Polyuréthane thermoplastique ignifugé à base d'au moins un diisocyanate et d'au moins une substance réactive avec isocyanate, et préférablement d'au moins un extenseur de chaînes, ainsi qu'éventuellement d'au moins un catalyseur, contenant au moins un agent ignifugeant, ainsi qu'éventuellement des additifs et/ou des auxiliaires, **caractérisé en ce qu'**un agent ignifugeant est un hydroxyde métallique qui est au moins partiellement entouré par une enveloppe et l'hydroxyde métallique est un hydroxyde d'aluminium, un oxyhydroxyde d'aluminium ou un mélange de ces hydroxydes et l'enveloppe autour de l'hydroxyde métallique est à base d'un composé de type organosilane.

2. Polyuréthane selon la revendication 1, **caractérisé en ce qu'**au moins un agent ignifugeant contenant du phosphore est contenu en tant qu'agent ignifugeant supplémentaire, qui est un dérivé d'acide phosphorique, d'acide phosphonique et/ou d'acide phosphinique.

3. Polyuréthane selon la revendication 2, **caractérisé en ce que** l'agent ignifugeant contenant du phosphore est liquide à 21 °C.

4. Polyuréthane selon l'une quelconque des revendications précédentes, **caractérisé en ce que** l'hydroxyde métallique est un hydroxyde d'aluminium.

5. Polyuréthane selon la revendication précédente, **caractérisé en ce que** l'hydroxyde métallique présente une surface spécifique de 2 m²/g à 9 m²/g.

6. Polyuréthane selon l'une quelconque des revendications précédentes, **caractérisé en ce que** plus de 50 % des hydroxydes métalliques au moins partiellement entourés par une enveloppe possèdent une extension maximale inférieure à 10 µm.

7. Polyuréthane selon l'une quelconque des revendications précédentes, **caractérisé en ce que** l'enveloppe est à base d'hexadécylsilane.

8. Polyuréthane selon l'une quelconque des revendications précédentes, **caractérisé en ce qu'**une hydrotalcite et/ou un silicate stratifié sont contenus.

9. Polyuréthane selon l'une quelconque des revendications précédentes, **caractérisé en ce que** le silicate stratifié est un silicate stratifié intercalé de manière organique ou une hydrotalcite intercalée de manière organique.

10. Polyuréthane selon la revendication 8 ou 9, **caractérisé en ce que** la somme des pourcentages en poids (% en poids) de tous les agents ignifugeants et du silicate stratifié et/ou de l'hydrotalcite dans le polyuréthane est de 10 % en poids à 80 % en poids et ces pourcentages en poids se réfèrent à la somme du poids de l'au moins un diisocyanate, de l'au moins une substance réactive avec isocyanate, et éventuellement d'au moins un extenseur de chaînes, ainsi qu'éventuellement d'au moins un catalyseur.

11. Polyuréthane selon la revendication précédente, **caractérisé en ce que** le rapport du poids d'agent ignifugeant contenant du phosphore sur hydroxyde métallique sur silicate stratifié et/ou hydrotalcite se comporte comme 9 sur 34 sur 5.

12. Polyuréthane selon l'une quelconque des revendications précédentes, **caractérisé en ce que** la substance réactive avec isocyanate possède un poids moléculaire moyen en nombre compris entre 500 g/mole et 6 x 10³ g/mole, préférablement entre 0,8 x 10³ g/mole et 2 x 10³ g/mole, plus préférablement entre 0,95 x 10³ g/mole et 1,5 x 10³ g/mole.

13. Polyuréthane selon la revendication 12, **caractérisé en ce que** la substance réactive avec isocyanate est un polyétherpolyol.

14. Utilisation d'un polyuréthane selon l'une quelconque des revendications précédentes pour la préparation de gaines de câbles.

15. Procédé pour la préparation d'un polyuréthane thermoplastique à base d'un mélange d'au moins un diisocyanate et d'au moins une substance réactive avec isocyanate, et préférablement d'au moins un extenseur de chaînes, éventuellement d'au moins un catalyseur, contenant au moins un agent ignifugeant, ainsi qu'éventuellement des additifs et/ou des auxiliaires, **caractérisé en ce que** dans une première étape, un polyuréthane thermoplastique à base d'un mélange d'au moins un diisocyanate et d'au moins une substance réactive avec isocyanate, et préférablement d'au moins un extenseur de chaînes, ainsi qu'éventuellement d'au moins un catalyseur et/ou des additifs et/ou des auxiliaires est préparé, préférablement en tant que granulé,
et au moins un agent ignifugeant est ajouté à ce polyuréthane thermoplastique dans au moins une étape supplémentaire, préférablement dans une extrudeuse à deux vis, lequel agent ignifugeant est un hydroxyde métallique qui est recouvert au moins partiellement par une enveloppe et l'hydroxyde métallique est un hydroxyde d'aluminium, un oxyhydroxyde d'aluminium ou un mélange de ces hydroxydes et l'enveloppe autour de l'hydroxyde métallique est à base d'un composé de type organosilane.

16. Procédé pour la préparation d'un polyuréthane selon la revendication précédente, **caractérisé en ce qu'**un deuxième agent ignifugeant contenant du phosphore, liquide à 21 °C, est ajouté au mélange.

17. Utilisation d'un hydroxyde métallique qui est entouré au moins partiellement par une enveloppe en tant qu'agent ignifugeant dans un polyuréthane thermoplastique, l'hydroxyde métallique étant un hydroxyde d'aluminium, un oxyhydroxyde d'aluminium ou un mélange de ces hydroxydes et l'enveloppe autour de l'hydroxyde métallique étant à base d'un composé de type organosilane.
